# EUROPÄISCHE PATENTSCHRIFT

(11) **EP 3 378 754 B1**
(45) Veröffentlichungstag und Bekanntmachung des Hinweises auf die Patenterteilung: **12.08.2020**
(21) Anmeldenummer: 18161403.3
(22) Anmeldetag: 13.03.2018
(51) Int. Cl.: B62K 27/10, B62K 27/00, B62D 63/06, B60D 1/00

(54) **FAHRRADANHÄNGER MIT VERSCHWENKBARER DEICHSEL**
BICYCLE TRAILER WITH PIVOTABLE DRAWBAR
REMORQUE DE BICYCLETTE AVEC TIMON PIVOTANT

(30) Priorität: 22.03.2017 DE 102017106142
(43) Veröffentlichungstag der Anmeldung: 26.09.2018
(73) Patentinhaber: Kettler Alu-Rad GmbH, 50739 Köln (DE)
(72) Erfinder: Fiegl, Thomas, 64367 Mühltal (DE); Pohl, Achim, 64342 Seeheim-Jugenheim (DE)
(74) Vertreter: WSL Patentanwälte Partnerschaft mbB

(56) Entgegenhaltungen:
- EP-A1- 1 162 134
- WO-A1-2014/154903
- CN-Y- 2 483 222
- DE-A1-102011 103 757
- DE-U1-202008 013 184
- US-A- 5 308 096
- US-A1- 2007 063 474
- US-A1- 2007 284 842
- US-A1- 2011 068 558
- US-B1- 6 959 938

## Beschreibung

Die vorliegende Erfindung betrifft einen Fahrradanhänger mit einem Anhängerrahmen, einem Ladeboden, einer Hinterradaufnahme und einer Deichsel mit einem ersten Ende und einem zweiten Ende, wobei das zweite Ende der Deichsel über ein Gelenk mit einer Gelenkachse mit dem Anhängerrahmen verbunden ist, sodass die Deichsel relativ zu dem Anhängerrahmen zwischen einer ersten Position und einer zweiten Position um die Gelenkachse verschwenkbar ist, wobei der Anhängerrahmen eine Vorderseite, eine Rückseite, eine Oberseite und eine Unterseite aufweist, wobei die Gelenkachse näher an der Vorderseite als die Hinterradaufnahme angeordnet ist, wobei sich das erste Ende der Deichsel in der zweiten Position über die Vorderseite des Anhängerrahmens hinaus erstreckt und derart angeordnet ist, dass das erste Ende der Deichsel mit einem Zugfahrzeug verbindbar ist, wobei der Ladeboden eine Ladefläche und eine Unterbodenfläche aufweist, die auf gegenüberliegenden Seiten des Ladebodens angeordnet sind.

Fahrradanhänger werden für den Transport von Gütern oder Personen verwendet, wobei die zu transportierenden Güter oder Personen auf der Ladefläche des Fahrradanhängers platziert werden. Zum Ziehen des Anhängers wird die Deichsel an einem Zugfahrzeug befestigt. Die Deichsel dient dem Übertragen von Kräften zwischen dem Zugfahrzeug und dem Anhänger und definiert einen vorgegebenen Abstand zwischen dem Anhänger und dem vorausfahrenden Zugfahrzeug. Die Deichsel verhindert insbesondere, dass der Anhänger auf das vorausfahrende Zugfahrzeug auflaufen kann. Gleichzeitig ermöglicht die Deichsel, dass der Fahrradanhänger in einer Kurvenfahrt einer vorgegebenen Trajektorie folgt.

Damit die Deichsel die auf sie wirkenden Kräfte aufnehmen kann, muss die Deichsel entsprechend stabil ausgestaltet sein. Soll der Fahrradanhänger beispielsweise mit einem Auto transportiert werden, verhindert das sich über die Vorderseite des Anhängers hinaus erstreckende erste Ende der Deichsel, dass der Fahrradanhänger platzsparend in einem Kofferraum verstaut werden kann.

Um den Platzbedarf herkömmlicher Anhänger beim Verstauen zu reduzieren, ist bei einigen Fahrradanhängern das zweite Ende der Deichsel lösbar an dem Anhängerrahmen befestigt, sodass die Deichsel von dem Anhängerrahmen gelöst und anschließend getrennt von dem Anhänger verstaut werden kann. Die US-Patentschrift US 5,308,096 beschreibt einen derartigen Anhänger mit einer verschwenkbar angeordneten Deichsel. Zum Ziehen des Anhängers ist das erste Ende der Deichsel mit einem Fahrrad verbindbar, während für einen platzsparenden Transport des Fahrradanhängers das zweite mit dem Anhängerrahmen verbundene Ende der Deichsel von dem Anhängerrahmen gelöst werden kann.

Wird das zweite Ende der Deichsel von dem Anhängerrahmen gelöst, kann die Deichsel bei einem Transport verloren gehen. Darüber hinaus erfordert das Lösen und/oder Befestigen des zweiten Endes der Deichsel an dem Anhänger einen zusätzlichen Montageaufwand.

US 6 959 938 B1 offenbart die Merkmale des Oberbegriffs des Anspruchs 1. Die Druckschriften US 6,959,938 B1 und US 2007/0284842 A1 zeigen jeweils einen zusammenlegbaren Fahrradanhänger mit einer Deichsel. Um den Fahrradanhänger kompakt zusammenlegen zu können, ist die Deichsel um eine Drehachse relativ zu dem Fahrradrahmen verschwenkbar angeordnet. In dem zusammengelegten Zustand des Fahrradanhängers ist die Deichsel auf der Seite der Unterbodenfläche angeordnet. Der Fahrradanhänger weist keine Vorderradaufnahme und auch kein an der Vorderradaufnahme befestigtes Vorderrad auf.

Die Druckschrift DE 20 2008 013 184 U1 betrifft einen Fahrradanhänger, der zu einem Gepäckkarren umgebaut werden kann. Weder in seiner Ausgestaltung als Fahrradanhänger noch in seiner Ausgestaltung als Gepäckkarren ist ein Vorderrad vorgesehen, welches an einer Vorderradaufnahme befestigt und zusammen mit der Deichsel verschwenkbar ist.

Die Druckschrift US 2011/0068558 A1 zeigt einen Transportanhänger, der über eine Deichsel an einer Sitzstange eines Fahrrads befestigt werden kann. Die Deichsel ist um eine Drehachse relativ zu dem Rahmen des Transportanhängers verschwenkbar. Allerdings weist der Transportanhänger keine Vorderradaufnahme und kein an der Vorderradaufnahme befestigtes Vorderrad auf.

Eine Aufgabe der vorliegenden Erfindung ist es daher, einen leicht handhabbaren und platzsparend transportierbaren Fahrradanhänger bereitzustellen.

Zumindest eine dieser Aufgaben wird durch einen Fahrradanhänger der eingangs genannten Art gelöst, wobei der Anhänger eine Vorderradaufnahme und ein an der Vorderradaufnahme befestigtes Vorderrad mit einer Drehachse aufweist, wobei die Vorderradaufnahme gekoppelt mit der Deichsel relativ zu dem Anhängerrahmen um die Gelenkachse des Gelenks derart verschwenkbar angeordnet ist, dass in einer Seitenansicht senkrecht zu der Vorderseite und der Rückseite des Anhängerrahmens die Drehachse des Vorderrads auf der Seite der Unterbodenfläche angeordnet ist, wenn die Deichsel in der ersten Position ist, und die Drehachse des Vorderrads in der Seitenansicht auf der Seite der Ladefläche angeordnet und/oder weiter in Richtung zur Seite der Ladefläche hin verschoben ist, wenn die Deichsel in der zweiten Position ist.

Die Unterbodenfläche und die Ladefläche sind auf gegenüberliegenden Seiten des Ladebodens angeordnet. Wird der Fahrradanhänger genutzt, ist an der Hinterradaufnahme mindestens ein Hinterrad befestigt. Vorzugsweise hat der Anhänger zwei Hinterradaufnahme mit der je ein Hinterrad an dem Anhänger befestigt ist. Im Betrieb des Fahrradanhängers haben die Hinterräder Bodenkontakt, sodass die Unterbodenfläche und die Unterseite des Anhängerrahmens dem Boden zugewandt sind. Die Ladefläche und die Oberseite des Anhängerrahmens sind entsprechend von dem Boden abgewandt. Befindet sich die Deichsel in der ersten Position, ist das erste Ende der Deichsel auf der Seite der Unterbodenfläche des Ladebodens und näher an der Rückseite des Anhängerrahmens angeordnet als das zweite Ende der Deichsel. In der ersten Position erstreckt sich die Deichsel mit ihrem ersten Ende in Richtung der Rückseite des Anhängerrahmens. Auf diese Weise ist der Anhänger platzsparend transportierbar.

Vorzugsweise ragt das erste Ende der Deichsel in der ersten Position in einer Draufsicht auf die Unterbodenfläche nicht über die Unterbodenfläche hinaus. Der Anhänger ist mit der Deichsel in der ersten Position noch platzsparender transportierbar. Insbesondere bildet das erste Ende der Deichsel auf diese Weise keinen Überstand an dem der Anhänger beim Bewegen über den Boden an Personen oder Gegenständen anstoßen bzw. hängen bleiben könnte. Die Handhabbarkeit des Anhängers ist verbessert.

Durch Verschwenken der Deichsel in die zweite Position ist der Anhänger derart konfigurierbar, dass der Anhänger von einem Zugfahrzeug an der Deichsel gezogen werden kann. Das für eine Verbindung mit einem Zugfahrzeug vorgesehene erste Ende der Deichsel erstreckt sich in der zweiten Position über die Vorderseite des Anhängerrahmens hinaus und ist derart angeordnet, dass das erste Ende der Deichsel mit einem Zugfahrzeug verbindbar ist. Das zweite Ende der Deichsel ist sowohl in der ersten Position als auch in der zweiten Position und während einer Schwenkbewegung über das Gelenk mit dem Anhängerrahmen verbunden, sodass eine Änderung der Konfiguration des Anhängers zum Ziehen mit der Deichsel und zum platzsparenden Transportieren keine Demontage der Deichsel von dem Anhängerrahmen erfordert. Die Deichsel kann bei einem Transport des Anhängers mit der Deichsel in der zweiten Position nicht verloren gehen.

Im Sinne der vorliegenden Erfindung wird der Begriff "Anhänger" synonym für "Fahrradanhänger" verwendet, wobei die Lehre der vorliegenden Erfindung nicht darauf beschränkt ist, dass der Anhänger mit einem Fahrrad gezogen wird. Der Fahrradanhänger kann auch mit anderen Zugfahrzeugen verbunden werden, ohne von der erfindungsgemäßen Lehre abzuweichen.

In einer Ausführungsform umfasst die Schwenkbewegung der Deichsel zum Verlassen der zweiten Position in Richtung der ersten Position keine Richtungskomponente, die in eine Richtung von der Unterbodenfläche des Ladenbodens weg zu der Ladefläche hin weist, und/oder die Schwenkbewegung der Deichsel zum Verlassen der zweiten Position in Richtung der ersten Position eine Richtungskomponente umfasst, die in eine Richtung von der Rückseite weg zu der Vorderseite des Anhängerrahmens hin weist. Anders ausgedrückt, in einem Betrieb des Anhängers, bei dem mit der Hinterradaufnahme verbundene Hinterräder Bodenkontakt haben und die Unterbodenfläche dem Boden zugewandt ist, umfasst die Schwenkbewegung der Deichsel zum Verlassen der zweiten Position in Richtung der ersten Position eine Bewegungskomponente in Richtung des Bodens. Die Deichsel wird zum Verlassen der zweiten Position in Richtung des Bodens verschwenkt. Auf diese Weise wird die Schwenkbewegung zum Überführen der Deichsel aus der zweiten Position in die erste Position nicht durch Aufbauten des Anhängers, wie beispielsweise ein Überrollbügel, oder auf der Ladefläche befindliche Güter und/oder Personen beeinträchtigt.

In einer Ausführungsform ist die Gelenkachse des Gelenks mit dem das zweite Ende der Deichsel an dem Anhängerrahmen befestigt ist, parallel zu der Hinterradaufnahme angeordnet. Vorzugsweise erstreckt sich das erste Ende der Deichsel in der ersten Position parallel zu der Unterbodenfläche.

In einer Ausführungsform weist das Gelenk und/oder der Anhängerrahmen Mittel zum lösbaren Fixieren der Deichsel in der zweiten Position auf, wobei das Mittel zum lösbaren Fixieren vorzugweise eine Gelenkarretierung und/oder einen Schnellspanner aufweist. Ist die Deichsel in der zweiten Position mit einem Mittel fixierbar, kann das erste Ende der Deichsel in der zweiten Position leichter mit einem Zugfahrzeug verbunden bzw. von diesem gelöst werden. Die Fixierung verhindert, dass die Deichsel durch die Schwerkraft in Richtung Boden schwenkt, wenn das erste Ende der Deichsel in der zweiten Position nicht an einem Zugfahrzeug befestigt ist. Das Mittel zum lösbaren Fixieren kann beispielsweise eine Gelenkarretierung sein, die ein Betätigen des Gelenks verhindert, oder einen Schnellspanner aufweisen, mit der das Gelenk und/oder die Deichsel in der zweiten Position festgespannt wird.

In einer Ausführungsform umfasst das Lösen der Fixierung der Deichsel in der zweiten Position ein Verschwenken der Deichsel mit einer Bewegungskomponente in eine Richtung von der Unterbodenfläche des Ladebodens hin zu der Ladefläche. Haben an der Hinterradaufnahme befestigte Räder Bodenkontakt, umfasst das Lösen der Fixierung der Deichsel in der zweiten Position ein Anheben der Deichsel, d.h. eine Schwenkbewegung der Deichsel von dem Boden weg. Auf diese Weise kann die Fixierung leicht und ohne Werkzeug durch ein Anheben der Deichsel gelöst werden. Nach dem Lösen wird die Deichsel in die zweite Position zurückgeschwenkt und aus der zweiten Position in Richtung der ersten Position nach unten in Richtung Boden geschwenkt.

In einer Ausführungsform weist der Anhänger eine Vorderradaufnahme und ein an der Vorderradaufnahme befestigtes Vorderrad mit einer Drehachse auf, wobei die Vorderradaufnahme gekoppelt mit der Deichsel relativ zu dem Anhängerrahmen um die Gelenkachse des Gelenks derart verschwenkbar angeordnet ist, dass in einer Seitenansicht senkrecht zu der Vorderseite und der Rückseite des Anhängerrahmens die Drehachse des Vorderrads auf der Seite der Unterbodenfläche angeordnet ist, wenn die Deichsel in der ersten Position ist, und die Drehachse des Vorderrads in der Seitenansicht auf der Seite der Ladefläche angeordnet und/oder weiter in Richtung zur Seite der Ladefläche hin verschoben ist, wenn die Deichsel in der zweiten Position ist. Die Vorderradaufnahme und die Deichsel sind gekoppelt relativ zu dem Anhängerahmen um die Gelenkachse verschwenkbar. Die Deichsel und die Vorderradaufnahme sind gemeinsam durch Betätigen der Deichsel um die Gelenkachse verschwenkbar. Die Deichsel und die Vorderradaufnahme werden beim Verschwenken zwischen der ersten Position und der zweiten Position um den gleichen Schwenkwinkel verschwenkt. Wird die Deichsel zwischen der ersten und zweiten Position hin und her geschwenkt, verschwenkt auch die Vorderradaufnahme um die Gelenkachse.

Die Vorderradaufnahme dient der Befestigung des Vorderrades an dem Anhänger, sodass der Anhänger vielseitig eingesetzt werden kann. Befindet sich die Deichsel in der ersten Position, ist die Drehachse des Vorderrades in einer Seitenansicht senkrecht zu der Vorderseite und der Rückseite des Anhängerrahmens auf der Seite der Unterbodenfläche angeordnet. Das an der Vorderradaufnahme befestigte Vorderrad ist in der ersten Position, wie die Deichsel, dem Boden zugewandt, sodass das Vorderrad auf dem Boden aufsetzt und um seine Drehachse über die Fahrbahn rollbar ist. Der Anhänger steht mit den Hinterrädern und dem Vorderrad auf der Fahrbahn.

Ist die Drehachse des Vorderrads in der Seitenansicht senkrecht auf die Vorderseite und Rückseite des Anhängerrahmens auf der Seite der Ladefläche angeordnet und/oder weiter in Richtung zur Seite der Ladefläche hin verschoben, wenn die Deichsel in der zweiten Position ist, so ist in einem Betrieb des Anhängers der Abstand zwischen der Drehachse des an der Vorderradaufnahme befestigten Vorderrads und der Fahrbahn klein, wenn die Deichsel in der ersten Position ist, und größer, wenn die Deichsel in der zweiten Position ist. Befindet sich die Drehachse des Vorderrads auf der Seite der Ladefläche hat das Vorderrad keinen Bodenkontakt, wenn sich die Deichsel in der zweiten Position befindet. Auf diese Weise wird der Rollwiderstand beim Ziehen des Anhängers mit einem Zugfahrzeug reduziert.

Durch die gekoppelte Verschwenkbarkeit der Deichsel und der Vorderradaufnahme kann durch Verschwenken der Deichsel um die Gelenkachse, das an der Vorderradaufnahme befestigte Vorderrad mit einer Fahrbahn in bzw. außer Eingriff gebracht werden. Der Wechsel zwischen einer Konfiguration, in der der Anhänger zum Ziehen mit einem Zugfahrzeug verbindbar ist, und einer Konfiguration, in der der Anhänger unabhängig von einem Zugfahrzeug geschoben werden kann, kann somit durch Verschwenken der Deichsel von der ersten in die zweite Position vollzogen werden. Das Vorderrad wirkt als Stützrad und der Fahrradanhänger kann beispielsweise als Schubwagen oder Kinderwagen genutzt werden, wobei das erste Ende der Deichsel in der ersten Position zwischen der Unterbodenfläche und dem Boden angeordnet ist. Wird der Fahrradanhänger mit der Deichsel in der ersten Position als Kinderwagen genutzt, beeinträchtigt die auf der Seite der Unterbodenfläche angeordnete Deichsel nicht das Sehfeld der mit dem Kinderwagen transportierten Kinder und erschwert auch nicht das Ein- und Aussteigen.

In einer Ausführungsform ist die Deichsel in der ersten Position fixierbar, wobei vorzugsweise der Anhängerrahmen und/oder die Unterbodenfläche Mittel zum Fixieren der Deichsel in der ersten Position aufweist. Die Fixierung der Deichsel in der ersten Position dient der Sicherung der Deichsel, wenn der Anhänger unabhängig von einem Zugfahrzeug bewegt oder transportiert wird. Weist der Anhänger eine Vorderradaufnahme auf, wie sie oben beschrieben ist, verhindert die Fixierung, dass sich die Deichsel ungewollt aus der ersten Position löst und ein an der Vorderradaufnahme befestigtes Vorderrad ungewollt um die Gelenkachse verschwenkt wird und der Anhänger auf den Boden aufsetzt.

In einer Ausführungsform weist die Unterbodenfläche eine Deichselaufnahme zur Aufnahme der Deichsel in der ersten Position auf. Beispielsweise kann die Deichselaufnahme durch eine Vertiefung in der Unterbodenfläche gebildet werden, in die die Deichsel in der ersten Position zumindest abschnittsweise einbringbar ist. Die Deichselaufnahme kann auch von der Unterbodenfläche abstehende Rastnasen aufweisen, mit denen die Deichsel in der ersten Position verrastbar ist.

In einer Ausführungsform beträgt der Schwenkwinkel α zwischen der ersten Position und der zweiten Position 120° bis 210°, bevorzugt 170° bis 190°. Ist der Schwenkwinkel α zwischen der ersten Position und der zweiten Position beispielsweise 180° groß, kann die Vorderradaufnahme und die Deichsel um 180° verschwenkt werden. Ist eine Vorderradaufnahme an der Gelenkachse wie oben beschrieben angeordnet, so kann die Vorderradaufnahme im Betrieb des Anhängers auf diese Weise diametral gegenüberliegend auf der Seite der Unterbodenfläche angeordnet sein, wenn die Deichsel in der ersten Position ist, und auf der Seite der Ladefläche, wenn die Deichsel in der zweiten Position ist.

In einer weiteren Ausführungsform ist die Deichsel zwischen der zweiten Position und einer dritten Position verschwenkbar, wobei die Schwenkbewegung der Deichsel zwischen der zweiten Position und der dritten Position von einer Schwenkbewegung der Vorderradaufnahme entkoppelt ist, wobei der Schwenkwinkel β zwischen der ersten Position und der dritten Position größer ist als der Schwenkwinkel α zwischen der ersten Position und der zweiten Position. Die Deichsel kann auf diese Weise von der ersten Position zunächst in die zweite Position und über die zweite Position hinaus in die dritte Position verschwenkt werden, wobei die Schwenkbewegung der Deichsel zwischen der zweiten Position und der dritten Position unabhängig von einer Schwenkbewegung der Vorderradaufnahme ist. Ist die Deichsel unabhängig von der Vorderradaufnahme zwischen der zweiten Position und der dritten Position verschwenkbar, so ist es möglich, das zum Ziehen des Anhängers mit einem Zugfahrzeug verbindbare Ende der Deichsel in verschiedenen Höhen mit einem Zugfahrzeug zu verbinden, ohne dass die Vorderradaufnahme aus ihrer Position verschwenkt wird.

In einer Ausführungsform schließen die Deichsel und die Vorderradaufnahme in dem Schwenkbereich zwischen der ersten Position und der zweiten Position relativ zu der Gelenkachse einen konstanten Winkel γ ein. In dem Schwenkbereich zwischen der ersten Position und der zweiten Position haben die Deichsel und die Vorderradaufnahme eine konstante Winkelbeziehung, sodass die Deichsel und die Vorderradaufnahme in diesem Bereich simultan um den gleichen Winkel verschwenkt werden.

Damit der Anhänger besser steuerbar ist, wenn die Deichsel in der ersten Position angeordnet ist, ist in einer Ausführungsform vorgesehen, dass die Gelenkachse parallel zu der Hinterradaufnahme ist und ein mit der Vorderradaufnahme befestigtes Vorderrad um eine senkrecht zu der Gelenkachse angeordnete Drehachse drehbar ist. Haben das Vorderrad und die Hinterräder des Anhängers Bodenkontakt, ist das Vorderrad um die senkrecht zu der Gelenkachse angeordnete Drehachse drehbar, sodass beim Bewegen des Anhängers mit der Deichsel in der ersten Position der Anhänger um das Vorderrad lenkbar ist.

In einer Ausführungsform ist das an der Vorderradaufnahme befestigte Vorderrad lösbar und/oder ein Spritzschutz lösbar an der Vorderradaufnahme befestigbar. Wird der Anhänger von einem Zugfahrzeug gezogen, kann ein mit der Vorderradaufnahme befestigter Spritzschutz den Anhänger bzw. die auf der Ladefläche befindlichen Güter und/oder Personen vor von dem Zugfahrzeug aufgewirbeltem Spritzwasser schützen. Der Spritzschutz kann alternativ zu dem Vorderrad oder zusätzlich zu dem Vorderrad an der Vorderradaufnahme befestigt werden. Soll der Spritzschutz anstelle des Vorderrads an der Vorderradaufnahme befestigt werden, wird das Vorderrad zunächst von der Vorderradaufnahme gelöst und durch den Spritzschutz ersetzt. Soll der Fahrradanhänger beispielsweise zum Transport großer Güter verwendet werden, kann das Vorderrad von der Vorderradaufnahme gelöst werden, sodass die Anordnung von Gütern auf der Ladefläche nicht durch das Vorderrad erschwert wird.

Weitere Vorteile, Merkmale und Anwendungsmöglichkeiten der vorliegenden Erfindung werden anhand der vorliegenden Beschreibung einer Ausführungsform und der dazugehörigen Figuren deutlich, wobei gleiche Bezugszeichen auf gleiche Elemente verweisen. Es zeigen:
- Figur 1: eine perspektivische Seitenansicht auf eine Ausführungsform des erfindungsgemäßen Fahrradanhängers mit der Deichsel in der zweiten Position,
- Figur 2: eine perspektivische Seitenansicht auf die Ausführungsform gemäß Figur 1 mit der Deichsel in der ersten Position,
- Figur 3: eine Seitenansicht auf die Ausführungsform des Fahrradanhängers aus Figur 1 mit der Deichsel in der zweiten Position,
- Figur 4: eine Seitenansicht auf die Ausführungsform gemäß Figur 1 mit der Deichsel in der ersten Position,
- Figur 5: eine Seitenansicht auf die Ausführungsform gemäß Figur 1 mit einer überlagerten Darstellung des Fahrradanhänger mit der Deichsel in der ersten Position und in der zweiten Position, und
- Figur 6: eine Ansicht der Ausführungsform gemäß Figur 1 mit einem lösbar an der Vorderradaufnahme befestigten Spritzschutz.

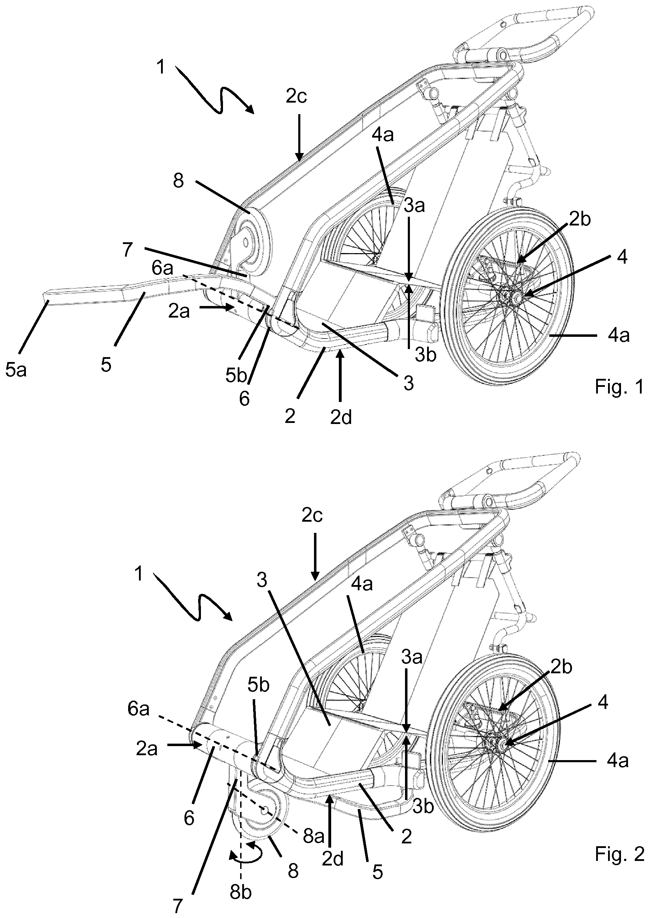

In den Figuren 1 bis 6 sind verschiedene Ansichten einer Ausführungsform des erfindungsgemäßen Fahrradanhängers 1 dargestellt. Der Fahrradanhänger 1 ist ein Multifunktionsanhänger, der zum Ziehen mit einem Zugfahrzeug verbindbar ist oder unabhängig von einem Zugfahrzeug als Kinderwagen genutzt werden kann.

Der Fahrradanhänger 1 hat einen Anhängerrahmen 2 mit einer Vorderseite 2a, einer Rückseite 2b, einer Oberseite 2c und einer Unterseite 2d. An einer mit dem Anhängerrahmen 2 verbundenen Hinterradaufnahme 4 sind zwei Hinterräder 4a befestigt. Der gezeigte Fahrradanhänger dient dem Transport von Kindern, sodass der mit dem Anhängerrahmen 2 verbundene Ladeboden 3 als Kindersitz ausgestaltet ist. Der Ladeboden 3 weist eine Ladefläche 3a und eine Unterbodenfläche 3b auf. Ladefläche 3a und Unterbodenfläche 3b sind auf gegenüberliegenden Seiten des Ladebodens 3 angeordnet. Die Unterbodenfläche 3b und die Unterseite 2d des Anhängerrahmens 2 sind dem Untergrund zugewandt, auf dem der Fahrradanhänger 1 mit den Hinterrädern 4a abgestellt wird.

Der Anhänger 1 weist eine Deichsel 5 mit einem ersten Ende 5a und einem zweiten Ende 5b auf, wobei das zweite Ende 5b der Deichsel 5 über ein Gelenk 6 mit einer Gelenkachse 6a derart an dem Anhängerrahmen 2 befestigt ist, dass die Deichsel 5 relativ zu dem Anhängerrahmen 2 zwischen einer ersten Position und einer zweiten Position verschwenkbar ist. Die Gelenkachse 6a des Gelenks 6 ist parallel zu der Hinterradaufnahme 4 und näher an der Vorderseite 2a angeordnet als die Hinterradaufnahme 4.

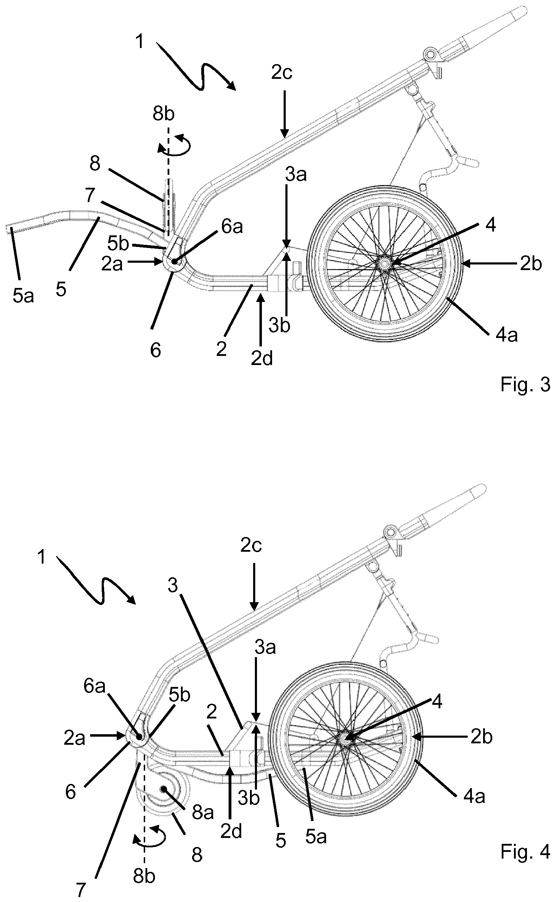

Befindet sich die Deichsel 5 in der ersten Position, wie sie in den Figuren 1 und 3 dargestellt ist, ragt das erste Ende 5a der Deichsel 5 über die Vorderseite 2a des Anhängerrahmens 2 hinaus und ist mit einem Zugfahrzeug verbindbar. In der zweiten Position ist das erste Ende 5a der Deichsel 5 auf der Seite der Unterbodenfläche 3b, d.h. zwischen der Unterbodenfläche 3b und dem Boden, und näher an der Rückseite 2b des Anhängers 2 angeordnet als das zweite Ende 5b der Deichsel 5. In einer nicht dargestellten Draufsicht auf die Ladefläche 3a ragt das erste Ende 5a der Deichsel 5 nicht über den Anhängerrahmen 2 über, sodass der Anhänger 1 mit der Deichsel 5 in der ersten Position gut transportierbar ist. Der Fahrradanhänger 1 mit der Deichsel 5 in der ersten Position ist in den Figuren 2 und 4 dargestellt.

Der Anhänger 1 weist weiter eine Vorderradaufnahme 7 und ein an der Vorderradaufnahme 7 befestigtes Vorderrad 8 auf. Die Vorderradaufnahme 7 ist gekoppelt mit der Deichsel 6 relativ zu dem Anhängerrahmen 2 um die Gelenkachse 6a des Gelenks derart verschwenkbar, dass in einer Seitenansicht senkrecht zu der Vorderseite 2a und der Rückseite 2b des Anhängerrahmens 2, wie sie in den Figuren 3 bis 5 gezeigt ist, die Drehachse 8a des Vorderrads 8 auf der Seite der Unterbodenfläche 3b angeordnet ist, wenn die Deichsel 5 in der ersten Position ist, und die Drehachse 8a des Vorderrads 8 in der Seitenansicht auf der Seite der Ladefläche 3a angeordnet und weiter in Richtung zur Seite der Ladefläche 3b hin verschoben ist, wenn die Deichsel 5 in der zweiten Position ist.

Somit haben beim Ziehen des Fahrradanhängers 1 nur die Hinterräder 4a Kontakt mit der Fahrbahn und der Rollwiderstand ist im Vergleich zu einer Konfiguration bei der das Vorderrad 8 und die Hinterräder 4a Kontakt mit der Fahrbahn haben niedriger. Gleichzeitig wird durch die Verschwenkung der Vorderradaufnahme 7 und dem lösbar daran angeordneten Vorderrad 8 die Bodenfreiheit des Fahrradanhängers 1 erhöht. Der Fahrradanhänger 1 kann leichter über Bodenunebenheiten gezogen werden, ohne dass der Vorderrad 8 unbeabsichtigt an den Bodenunebenheiten hängen bleibt.

Befindet sich die Deichsel 5 in der ersten Position ist das Vorderrad 8 mit einer Fahrbahn in Eingriff bringbar, sodass das Vorderrad 8 um seine Drehachse 8a über die Fahrbahn rollbar ist. Der Fahrradanhänger 1 kann als Kinderwagen unabhängig von einem Zugfahrzeug mit den Hinterrädern 4a und dem Vorderrad 8 über die Fahrbahn geschoben werden. Das an der Vorderradaufnahme 7 befestigte Vorderrad 8 ist darüber hinaus um eine senkrecht zu der Gelenkachse 6a angeordnete Drehachse 8b drehbar, sodass sich der Fahrradanhänger 1 mit Hilfe des Vorderrads 8 lenken lässt.

Durch Verschwenken der Deichsel 5 zwischen der ersten Position und der zweiten Position kann der Anhänger 1 schnell und unkompliziert für die Verwendung als Fahrradanhänger 1 oder als Kinderwagen vorbereitet werden. Die Schwenkbewegung der Deichsel 5 zum Verlassen der zweiten Position in Richtung der ersten Position umfasst keine Richtungskomponente, die in eine Richtung von der Unterbodenfläche 3b des Ladebodens 3 weg zu der Ladefläche 3a weist. Zum Verlassen der zweiten Position in Richtung der ersten Position wird die Deichsel 5 in Richtung der Fahrbahn verschwenkt.

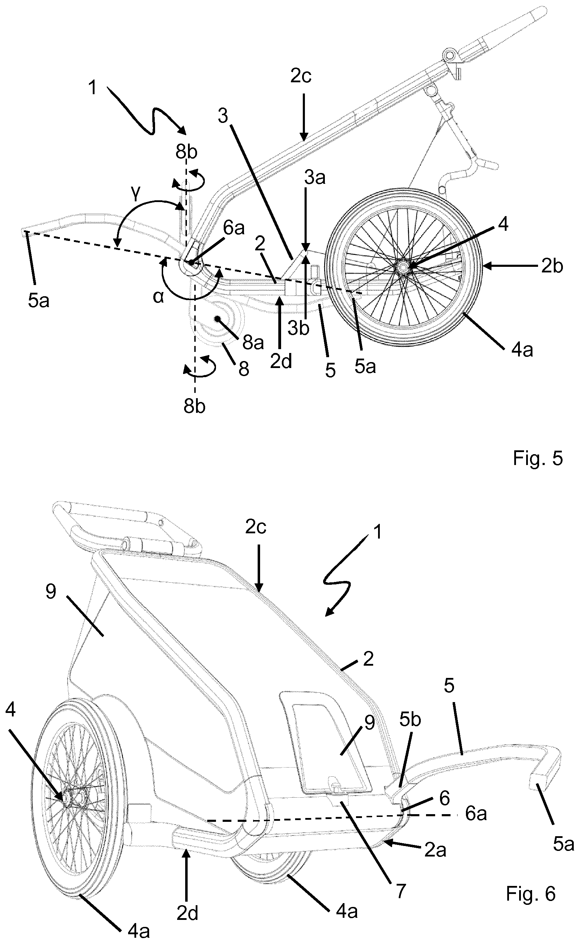

Die Figur 5 zeigt zu Anschauungszwecken die Deichsel 5 sowohl in der ersten Position als auch in der zweiten Position, wobei der Schwenkwinkel α der Winkel zwischen der ersten Position der Deichsel 5 und der zweiten Position der Deichsel 5 beschreibt. Der Schwenkwinkel α ist bei der gezeigten Ausführungsform 180°.

In den Figuren 1 bis 6 nicht dargestellt, ist die Deichsel 5 zusätzlich zwischen der zweiten Position und einer dritten Position verschwenkbar, ohne dass die Vorderradaufnahme 7 bei einer Schwenkbewegung der Deichsel 5 zwischen der zweiten Position und der dritten Position mitverschwenkt wird. Der Schwenkwinkel β zwischen der ersten Position und der dritten Position ist größer als der Schwenkwinkel α zwischen der ersten Position und der zweiten Position. Anders ausgedrückt, kann die Deichsel 5 aus der ersten Position zunächst in die zweite Position und anschließend über die zweite Position hinaus in die dritte Position verschwenkt werden. Die zusätzliche Verschwenkbarkeit der Deichsel 5 zwischen der zweiten Position und der dritten Position ermöglicht, dass das erste Ende 5a der Deichsel 5 in verschiedenen Höhen mit einem Zugfahrzeug verbindbar ist, ohne dass die horizontale Ausrichtung des Fahrradanhänger 1 relativ zu einer Fahrbahn verändert wird.

Wird die Deichsel 5 hingegen zwischen der ersten Position und der zweiten Position verschwenkt, schließen die Vorderradaufnahme 7 und die Deichsel 5 in einer Seitenansicht senkrecht zu der Vorderseite 2a und der Rückseite 2b des Anhängerrahmens 2 einen konstanten Winkel γ relativ zu der Gelenkachse ein (siehe Figur 5).

Die konstante Winkelbeziehung verhindert, dass die Vorderradaufnahme 7 in dem Schwenkbereich zwischen der ersten Position der Deichsel 5 und der zweiten Position der Deichsel 5 unabhängig von der Deichsel 5 verschwenkt werden kann. Die konstante Winkelbeziehung erhöht die Sicherheit beim Betrieb des Fahrradanhängers 1 als Kinderwagen, da durch die Arretierung der Deichsel 5 in der ersten Position gleichzeitig verhindert wird, dass ein lösbar an der Vorderradaufnahme 7 befestigtes Vorderrad 8 ungewollt verschwenkt und der Fahrradanhänger 1 auf einem Untergrund aufsetzen könnte.

Befindet sich die Deichsel 4 in der zweiten Position, kann anstelle des Vorderrads 8 ein Spritzschutz 9 an der Vorderradaufnahme 7 befestigt werden, wie es in der Figur 6 dargestellt ist. Der Spritzschutz 9 schützt die in dem Fahrradanhänger 1 befindlichen Kinder vor Spritzwasser, welches von einem vorausfahrenden Zugfahrzeug aufgewirbelt werden könnte. In Figur 6 weist der Anhänger 1 zusätzlich eine Außenhaut 10 auf, die über den Anhängerrahmen 2 gespannt ist und die Insassen und Güter im Inneren des Anhängers 1 vor Wettereinflüssen geschützt sind.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarerer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschreiben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Fahrradanhänger
- 2: Anhängerrahmen
- 2a: Vorderseite des Anhängerrahmens
- 2b: Rückseite des Anhängerrahmens
- 2c: Oberseite des Anhängerrahmens
- 2d: Unterseite des Anhängerrahmens
- 3: Ladeboden
- 3a: Ladefläche
- 3b: Unterbodenfläche
- 4: Hinterradaufnahme
- 4a: Hinterrad
- 5: Deichsel
- 5a: erstes Ende der Deichsel
- 5b: zweites Ende der Deichsel
- 6: Gelenk
- 6a: Gelenkachse
- 7: Vorderradaufnahme
- 8: Vorderrad
- 8a: Drehachse des Vorderrads
- 8b: Drehachse des Vorderrads senkrecht zu der Gelenkachse 6a
- 9: Spritzschutz
- 10: Außenhaut
- α: Schwenkwinkel zwischen der ersten Position und der zweiten Position
- β: Schwenkwinkel zwischen der ersten Position und der dritten Position
- γ: Winkel zwischen der Deichsel 5 und der Vorderradaufnahme 7

## Patentansprüche

1. Fahrradanhänger (1) mit einem Anhängerrahmen (2), einem Ladeboden (3), einer Hinterradaufnahme (4) und einer Deichsel (5) mit einem ersten Ende (5a) und einem zweiten Ende (5b), wobei das zweite Ende (5b) der Deichsel (5) über ein Gelenk (6) mit einer Gelenkachse (6a) mit dem Anhängerrahmen (2) verbunden ist, sodass die Deichsel (5) relativ zu dem Anhängerrahmen (2) zwischen einer ersten Position und einer zweiten Position um die Gelenkachse (6a) verschwenkbar ist, wobei der Anhängerrahmen (2) eine Vorderseite (2a), eine Rückseite (2b), eine Oberseite (2c) und eine Unterseite (2d) aufweist, wobei die Gelenkachse (6a) näher an der Vorderseite (2a) als die Hinterradaufnahme (4) angeordnet ist, wobei sich das erste Ende (5a) der Deichsel (5) in der zweiten Position über die Vorderseite (2a) des Anhängerrahmens (2) hinaus erstreckt und derart angeordnet ist, dass das erste Ende (5a) der Deichsel (5) mit einem Zugfahrzeug verbindbar ist, wobei der Ladeboden (3) eine Ladefläche (3a) und eine Unterbodenfläche (3b) aufweist, die auf gegenüberliegenden Seiten des Ladebodens (3) angeordnet sind, wobei das erste Ende (5a) der Deichsel (5) in der ersten Position auf der Seite der Unterbodenfläche (3b) des Ladebodens (3) und näher an der Rückseite (2b) des Anhängerrahmens (2) angeordnet ist als das zweite Ende (5b) der Deichsel (5), **dadurch gekennzeichnet, dass** der Anhänger (1) eine Vorderradaufnahme (7) und ein an der Vorderradaufnahme (7) befestigtes Vorderrad (8) mit einer Drehachse (8a) aufweist, wobei die Vorderradaufnahme (7) gekoppelt mit der Deichsel (5) relativ zu dem Anhängerrahmen (2) um die Gelenkachse (6a) des Gelenks (6) derart verschwenkbar angeordnet ist, dass in einer Seitenansicht senkrecht zu der Vorderseite (2a) und der Rückseite (2b) des Anhängerrahmens (2) die Drehachse (8a) des Vorderrads (8) auf der Seite der Unterbodenfläche (3b) angeordnet ist, wenn die Deichsel (5) in der ersten Position ist, und die Drehachse (8a) des Vorderrads (8) in der Seitenansicht auf der Seite der Ladefläche (3a) angeordnet und/oder weiter in Richtung zur Seite der Ladefläche (3a) hin verschoben ist, wenn die Deichsel (5) in der zweiten Position ist.

2. Fahrradanhänger (1) nach Anspruch 1, **dadurch gekennzeichnet, dass** die Schwenkbewegung der Deichsel (5) zum Verlassen der zweiten Position in Richtung der ersten Position keine Richtungskomponente umfasst, die in eine Richtung von der Unterbodenfläche (3b) des Ladenbodens (3) weg zu der Ladefläche (3a) hin weist, und/oder die Schwenkbewegung der Deichsel (5) zum Verlassen der zweiten Position in Richtung der ersten Position eine Richtungskomponente umfasst, die in eine Richtung von der Rückseite (2b) weg zu der Vorderseite (2a) des Anhängerrahmens (2) hin weist.

3. Fahrradanhänger (1) nach Anspruch 1 oder 2, **dadurch gekennzeichnet, dass** das Gelenk (6) und/oder der Anhängerrahmen (2) Mittel zum lösbaren Fixieren der Deichsel (5) in der zweiten Position aufweist, wobei das Mittel zum lösbaren Fixieren der Deichsel (5) vorzugweise eine Gelenkarretierung und/oder einen Schnellspanner aufweist.

4. Fahrradanhänger (1) nach Anspruch 3, **dadurch gekennzeichnet, dass** das Lösen der Fixierung der Deichsel (5) in der zweiten Position ein Verschwenken der Deichsel (5) mit einer Bewegungskomponente in eine Richtung von der Unterbodenfläche (3b) des Ladenbodens (3) hin zu der Ladefläche (3a) umfasst.

5. Fahrradanhänger (1) nach einem der Ansprüche 1 bis 4, **dadurch gekennzeichnet, dass** die Deichsel (5) in der ersten Position fixierbar ist, wobei vorzugsweise der Anhängerrahmen (2) und/oder die Unterbodenfläche (3b) Mittel zum lösbaren Fixieren der Deichsel (5) in der ersten Position aufweist.

6. Fahrradanhänger (1) nach Anspruch 5, **dadurch gekennzeichnet, dass** die Unterbodenfläche (3b) eine Deichselaufnahme zur Aufnahme der Deichsel in der ersten Position aufweist.

7. Fahrradanhänger (1) nach einem der Ansprüche 1 bis 6, **dadurch gekennzeichnet, dass** der Schwenkwinkel (α) zwischen der ersten Position und der zweiten Position größer 90°, vorzugsweise in einem Bereich von 120° bis 210°, bevorzugt in einem Bereich von 170° und 190° ist.

8. Fahrradanhänger (1) nach einem der Ansprüche 1 bis 7, **dadurch gekennzeichnet, dass** die Deichsel (5) zwischen der zweiten Position und einer dritten Position verschwenkbar ist, wobei die Schwenkbewegung der Deichsel (5) zwischen der zweiten Position und der dritten Position von einer Schwenkbewegung der Vorderradaufnahme (7) entkoppelt ist, wobei der Schwenkwinkel (ß) zwischen der ersten Position und der dritten Position größer ist als der Schwenkwinkel (α) zwischen der ersten Position und der zweiten Position.

9. Fahrradanhänger (1) nach einem der Ansprüche 1 bis 8, **dadurch gekennzeichnet, dass** in dem Schwenkbereich zwischen der ersten Position und der zweiten Position die Deichsel (5) und die Vorderradaufnahme (7) gegenüber der Gelenkachse (6a) einen konstanten Winkel (y) einschließen.

10. Fahrradanhänger (1) nach einem der Ansprüche 1 bis 9, **dadurch gekennzeichnet, dass** die Gelenkachse (6a) parallel zu der Hinterradaufnahme (4) ist und das mit der Vorderradaufnahme (7) befestigte Vorderrad (8) um eine senkrecht zu der Gelenkachse (6a) angeordnete Drehachse (8b) drehbar ist.

11. Fahrradanhänger (1) nach einem der Ansprüche 1 bis 10, **dadurch gekennzeichnet, dass** das Vorderrad (8) von der Vorderradaufnahme (7) lösbar ist und/oder an der Vorderradaufnahme (7) ein Spritzschutz (9) lösbar befestigbar ist.

## Claims

1. Bicycle trailer (1) with a trailer frame (2), a loading floor (3), a rear wheel receiver (4), and a drawbar (5) with a first end (5a) and a second end (5b), wherein the second end (5b) of the drawbar (5) is connected to the trailer frame (2) via a hinge (6) with a hinge axis (6a), with the result that the drawbar (5) is pivotable relative to the trailer frame (2) between a first position and a second position about the hinge axis (6a), wherein the trailer frame (2) has a front (2a), a back (2b), a top (2c) and a bottom (2d), wherein the hinge axis (6a) is arranged closer to the front (2a) than the rear wheel receiver (4), wherein the first end (5a) of the drawbar (5) in the second position extends beyond the front (2a) of the trailer frame (2) and is arranged such that the first end (5a) of the drawbar (5) can be connected to a towing vehicle, wherein the loading floor (3) has a loading surface (3a) and an underbody surface (3b), which are arranged on opposite sides of the loading floor (3), wherein the first end (5a) of the drawbar (5) in the first position is arranged on the side of the underbody surface (3b) of the loading floor (3) and closer to the back (2b) of the trailer frame (2) than the second end (5b) of the drawbar (5), **characterized in that** the trailer (1) has a front wheel receiver (7) and a front wheel (8) fastened to the front wheel receiver (7) with a pivot axis (8a), wherein the front wheel receiver (7) is arranged pivotable, coupled with the drawbar (5), relative to the trailer frame (2) about the hinge axis (6a) of the hinge (6) such that in a side view perpendicular to the front (2a) and the back (2b) of the trailer frame (2) the pivot axis (8a) of the front wheel (8) is arranged on the side of the underbody surface (3b) when the drawbar (5) is in the first position, and in the side view the pivot axis (8a) of the front wheel (8) is arranged on the side of the loading surface (3a) and/or is shifted further in the direction towards the side of the loading surface (3a) when the drawbar (5) is in the second position.

2. Bicycle trailer (1) according to claim 1, **characterized in that** the pivoting movement of the drawbar (5) for leaving the second position in the direction of the first position does not comprise a directional component which points in a direction away from the underbody surface (3b) of the loading floor (3) towards the loading surface (3a), and/or the pivoting movement of the drawbar (5) for leaving the second position in the direction of the first position comprises a directional component which points in a direction away from the back (2b) towards the front (2a) of the trailer frame (2).

3. Bicycle trailer (1) according to claim 1 or 2, **characterized in that** the hinge (6) and/or the trailer frame (2) have means for releasably fixing the drawbar (5) in the second position, wherein the means for releasably fixing the drawbar (5) preferably has a hinge lock and/or a quick release.

4. Bicycle trailer (1) according to claim 3, **characterized in that** the release of the fixing of the drawbar (5) in the second position comprises a pivoting of the drawbar (5) with a movement component in a direction from the underbody surface (3b) of the loading floor (3) towards the loading surface (3a).

5. Bicycle trailer (1) according to one of claims 1 to 4, **characterized in that** the drawbar (5) can be fixed in the first position, wherein preferably the trailer frame (2) and/or the underbody surface (3b) has means for releasably fixing the drawbar (5) in the first position.

6. Bicycle trailer (1) according to claim 5, **characterized in that** the underbody surface (3b) has a drawbar receiver for receiving the drawbar in the first position.

7. Bicycle trailer (1) according to one of claims 1 to 6, **characterized in that** the pivoting angle (α) between the first position and the second position is larger than 90°, preferably in a range of from 120° to 210°, preferably in a range of from 170° to 190°.

8. Bicycle trailer (1) according to one of claims 1 to 7, **characterized in that** the drawbar (5) is pivotable between the second position and a third position, wherein the pivoting movement of the drawbar (5) between the second position and the third position is decoupled from a pivoting movement of the front wheel receiver (7), wherein the pivoting angle (β) between the first position and the third position is larger than the pivoting angle (α) between the first position and the second position.

9. Bicycle trailer (1) according to one of claims 1 to 8, **characterized in that** the drawbar (5) and the front wheel receiver (7) enclose a constant angle (γ) relative to the hinge axis (6a) in the pivoting range between the first position and the second position.

10. Bicycle trailer (1) according to one of claims 1 to 9, **characterized in that** the hinge axis (6a) is parallel to the rear wheel receiver (4) and the front wheel (8) fastened to the front wheel receiver (7) is rotatable about a pivot axis (8b) arranged perpendicular to the hinge axis (6a).

11. Bicycle trailer (1) according to one of claims 1 to 10, **characterized in that** the front wheel (8) is releasable from the front wheel receiver (7) and/or a splash guard (9) can be releasably fastened to the front wheel receiver (7).

## Revendications

1. Remorque de bicyclette (1) comprenant un châssis de remorque (2), un plateau de chargement (3), un logement de roue arrière (4) et un timon (5) comportant une première extrémité (5a) et une seconde extrémité (5b), dans laquelle la seconde extrémité (5b) du timon (5) est reliée au châssis de remorque (2) par l'intermédiaire d'une articulation (6) pourvue d'un axe d'articulation (6a) de telle sorte que le timon (5) est apte à pivoter par rapport au châssis de remorque (2) entre une première position et une seconde position autour de l'axe d'articulation (6a), le châssis de remorque (2) présente une face avant (2a), une face arrière (2b), une face supérieure (2c) et une face inférieure (2d), l'axe d'articulation (6a) est plus proche de la face avant (2a) que le logement de roue arrière (4), la première extrémité (5a) du timon (5) s'étend, dans la seconde position, au-delà de la face avant (2a) du châssis de remorque (2) et est disposée de telle sorte que la première extrémité (5a) du timon (5) peut être reliée à un véhicule tracteur, le plateau de chargement (3) présente une surface de chargement (3a) et une surface de soubassement (3b) qui sont disposées sur des faces opposées du plateau de chargement (3), la première extrémité (5a) du timon (5) étant disposée, dans la première position, du côté de la surface de soubassement (3b) du plateau de chargement (3) et plus proche de la face arrière (2b) du châssis de remorque (2) que la seconde extrémité (5b) du timon (5), **caractérisée en ce que** la remorque (1) présente un logement de roue avant (7) et une roue avant (8) fixée sur le logement de roue avant (7) pourvue d'un axe de rotation, le logement de roue avant (7) couplé au timon (5) étant monté pour pouvoir pivoter par rapport au châssis de remorque (2) autour de l'axe d'articulation (6a) de l'articulation (6) de façon telle que, en vue latérale perpendiculaire à la face avant (2a) et à la face arrière (2b) du châssis de remorque (2), l'axe de rotation (8a) de la roue avant (8) est disposé du côté de la surface de soubassement (3b) lorsque le timon est dans la première position, et l'axe de rotation (8a) de la roue avant (8) est disposé, en vue latérale, du côté de la surface de chargement (3a) et/ou décalé en direction du côté de la surface de chargement (3a) lorsque le timon (5) se trouve dans la seconde position.

2. Remorque de bicyclette (1) selon la revendication 1, **caractérisée en ce que** le mouvement de pivotement du timon (5), pour quitter la seconde position en direction de la première position, ne comprend pas de composante directionnelle orientée dans une direction partant de la surface de soubassement (3b) du plateau de chargement (3) vers la surface de chargement (3a), et/ou le mouvement de pivotement du timon (5) pour quitter la seconde position en direction de la première position comprend une composante directionnelle orientée dans une direction partant de la face arrière (2b) vers la face avant (2a) du châssis de remorque (2).

3. Remorque de bicyclette (1) selon la revendication 1 ou 2, **caractérisée en ce que** l'articulation (6) et/ou le châssis de remorque (2) comporte(nt) des moyens pour la fixation amovible du timon (5) dans la seconde position, le moyen de fixation amovible du timon (5) comprenant, de préférence, un blocage d'articulation et/ou un blocage rapide.

4. Remorque de bicyclette (1) selon la revendication 3, **caractérisée en ce que** le desserrage de la fixation du timon (5) dans la seconde position comprend un pivotement du timon (5) avec une composante de mouvement dans une direction partant de la surface de soubassement (3b) du plateau de chargement (3) vers la surface de chargement (3a).

5. Remorque de bicyclette (1) selon l'une des revendications 1 à 4, **caractérisée en ce que** le timon (5) peut être fixé dans la première position, et le châssis de remorque (2) et/ou la surface de soubassement (3b) comporte(nt) de préférence des moyens de fixation amovible du timon (5) dans la première position.

6. Remorque de bicyclette (1) selon la revendication 5, **caractérisée en ce que** la surface de soubassement (3b) présente un logement de timon destiné à recevoir le timon dans la première position.

7. Remorque de bicyclette (1) selon l'une des revendications 1 à 6, **caractérisée en ce que** l'angle de pivotement (α) entre la première position et la seconde position est supérieur à 90°, de préférence dans une plage de 120° à 210°, de préférence dans une plage de 170° à 190°.

8. Remorque de bicyclette (1) selon l'une des revendications 1 à 7, **caractérisée en ce que** le timon (5) est apte à pivoter entre la seconde position et une troisième position, le mouvement de pivotement du timon (5) entre la seconde position et la troisième position étant découplé d'un mouvement de pivotement du logement de roue avant (7), l'angle de pivotement (β) entre la première position et la troisième position étant plus grand que l'angle de pivotement (α) entre la première position et la seconde position.

9. Remorque de bicyclette (1) selon l'une des revendications 1 à 8, **caractérisée en ce que**, dans la plage de pivotement entre la première position et la seconde position, le timon (5) et le logement de roue avant (7) forment un angle (γ) constant par rapport à l'axe d'articulation (6a).

10. Remorque de bicyclette (1) selon l'une des revendications 1 à 9, **caractérisée en ce que** l'axe d'articulation (6a) est parallèle au logement de roue arrière (4) et **en ce que** la roue avant (8) fixée au logement de roue avant (7) peut pivoter autour d'un axe de rotation (8b) disposé perpendiculairement à l'axe d'articulation (6a).

11. Remorque de bicyclette (1) selon l'une des revendications 1 à 10, **caractérisée en ce que** la roue avant (8) peut être désolidarisée du logement de roue avant (7) et/ou une protection antiprojections (9) peut être fixée de manière amovible sur le logement de roue avant (7).
